**Europäisches Patentamt**

(19) **European Patent Office**

**Office européen des brevets**

(11) Veröffentlichungsnummer: **0 089 681**
**B1**

(12) **EUROPÄISCHE PATENTSCHRIFT**

(45) Veröffentlichungstag der Patentschrift:
**08.10.86**

(51) Int. Cl.⁴: **H 02 J 13/00,** H 04 B 3/54

(21) Anmeldenummer: **83102850.1**

(22) Anmeldetag: **22.03.83**

(54) **Auskoppelschaltung.**

(30) Priorität: **23.03.82 AT 1128/82**
**23.03.82 AT 1127/82**

(73) Patentinhaber: **Siemens Aktiengesellschaft Berlin und München, Wittelsbacherplatz 2, D-8000 München 2 (DE)**

(43) Veröffentlichungstag der Anmeldung:
**28.09.83 Patentblatt 83/39**

(72) Erfinder: **Rohn, Klaus, Dipl.-Ing., Sieveringerstrasse 79B, A-1190 Wien (AT)**

(45) Bekanntmachung des Hinweises auf die Patenterteilung:
**08.10.86 Patentblatt 86/41**

(84) Benannte Vertragsstaaten:
**AT CH DE FR LI NL**

(56) Entgegenhaltungen:
**AT - B - 352 209**

**Beschreibung**

Die Erfindung betrifft eine Auskoppelschaltung für einen Tonfrequenz-Rundsteuerempfänger mit einem Kondensatornetzgerät in Vollweg-Gleichrichterausführung mit Vorschaltkondensator, wobei netzeingangsseitig eine Schutzimpedanzbeschaltung sowie eine Überspannungsableiterbeschaltung vorsehbar ist, wobei gleichrichterausgangsseitig bzw. im Vollweg-Gleichrichter selbst eine Zenerdiodenbeschaltung vorsehbar ist, sowie mit einem an den Ausgang des Kondensator-Netzgerätes angeschlossenen Ladekondensator, wobei an den Ladekondensator eine Auskoppelstufe bestehend aus einem stromversorgungsmässig direkt mit dem Ladekondensator verbundenen Differenzverstärker angeschlossen ist, dessen erster Eingang an den Teilerpunkt eines ersten Spannungsteilers angeschlossen ist, dessen erster Teilerwiderstand an die phasenseitige Netzklemme angeschlossen ist und dessen zweiter Teilerwiderstand an das Massepotential des Ladekondensators angeschlossen ist, wobei der zweite Eingang des Differenzverstärkers an den Teilerpunkt eines zweiten Spannungsteilers angeschlossen ist, dessen erster Teilerwiderstand an das Massepotential des Ladekondensators angeschlossen ist und wobei als Ausgang für das tonfrequente Signal aus der Auskoppelstufe der Ausgang des Differenzverstärkers dient.

Bei einem Kondensatornetzteil mit Vollweg-Gleichrichtung treten bei Verwendung in einem Rundsteuerempfänger Schwierigkeiten durch Mischung im Vollweg-Gleichrichter und im Filtereingang auf. Bei der Gleichrichter-Brückenschaltung treten an den Wechselspannungsanschlüssen gegenüber den Gleichspannungsanschlüssen abgekappte Sinusschwingungen auf, wobei durch eine Zenerdiodenbeschaltung die Spannung begrenzt ist. Wird nun ein Gleichspannungsanschluss als Masse genommen und die Tonfrequenz beispielsweise vor dem Vorschaltkondensator abgenommen, so ist die das Filter aussteuernde Spannung von der oben erwähnten abgekappten Sinusschwingung mit erheblicher Amplitude überlagert bzw. gestört. Nachteilig ist, dass es durch die Verwendung von nichtlinearen Bauelementen im Netzgleichrichter sowie in Verstärkerstufen zu nichtlinearen Verzerrungen und somit zum Auftreten von Mischfrequenzen kommt. Tritt nun eine Tonfrequenz auf, die mit einer zweiten Frequenz, z.B. der Netzfrequenz oder auch Oberwellen der Netzfrequenz gemischt, die Durchlassfrequenz des nachgeschalteten Filters ergibt, so ist eine Mehrdeutigkeit des Ansprechverhaltens bezüglich der Frequenz gegeben, was wiederum zu Störungen Anlass gibt und insbesondere ein unerwünschtes Fehlschalten des Rundsteuerempfängers zur Folge haben kann.

Eine Schaltung der eingangs genannten Art ist aus der AT-B 352 209 bekannt. Diese Patentschrift betrifft einen an ein Starkstromnetz angeschlossenen Fernsteuerempfänger, dem Fernsteuersignale über das Starkstromnetz zugeführt werden, insbesondere einen Rundsteuerempfänger, mit einem frequenzselektiven Empfangsteil, einem diesem zugeordneten Auswerteteil und einem diesem nachgeschalteten Schaltorgan, wobei der Fernsteuerempfänger einen mit dem Eingangskreis des frequenzselektiven Empfangsteils gekoppelten, mit einem nicht linearen Schaltelement versehenen Stromversorgungsteil aufweist, der von Strömen mehrerer Frequenzen durchflossen ist, wobei zwischen dem Empfängereingang und dem Eingang des selektiven Empfangsteiles mindestens ein Schaltkreis zur Kompensation der durch das nichtlineare Schaltelement im Stromversorgungsteil verursachten Mischprodukte aus Netzfrequenz, ihren harmonischen und vom Starkstromnetz dem Empfänger zugeführten Fernsteuersignalschwingungen angeordnet ist. Bei einem der dargestellten Ausführungsbeispiele wird eine Kompensationsspannung bereits vor dem Eingang der Auskoppelstufe durch eine zusätzliche Schaltung mit zwei Kondensatoren erzeugt. Alle in der AT-B 352 209 dargestellten Ausführungsbeispiele haben den Nachteil, dass der frequenzselektive Schaltungsteil mit einem Differenzeingang ausgeführt werden muss, wobei die Ausgestaltung des Eingangsgliedes abhängig von der Auslegung der frequenzselektiven Schaltung ist.

In der AT-PS 326 756 wird ein Stromversorgungsteil für einen elektronischen Rundsteuerempfänger mit einem über einen Kondensator an das Wechselstromnetz angeschlossenen Gleichrichter, dem ein Spannungsstabilisator zugeordnet ist, beschrieben, bei dem dem Kondensator eine Spannungsschutzimpedanz, z.B. ein stossspannungsfester Widerstand, eine stossspannungsfeste Induktivität oder eine Serienschaltung einer stossspannungsfesten Induktivität und eines Widerstandes vorgeschaltet ist.

Der Erfindung liegt die Aufgabe zugrunde, die Steuerspannung für das nachgeschaltete Filter von einer Stelle abzugreifen, an der sie unverzerrt und überdies durch keine Bauelemente mit nichtlinearer Kennlinie, insbesondere durch Gleichrichter, von der Spannungsquelle getrennt ist. Dabei soll die Auslegung der frequenzselektiven Schaltung unabhängig von der Auslegung des Eingangsgliedes sein.

Diese Aufgabe wird erfindungsgemäss dadurch gelöst, dass der zweite Teilerwiderstand des zweiten Spannungsteilers an die mittelpunkts- bzw. nulleiterseitige Netzklemme angeschlossen ist, dass die Teilerverhältnisse des ersten und des zweiten Spannungsteilers für eine optimale Kompensation gleich gross sind und dass die Auskoppelstufe im Arbeitsbereich frequenzunabhängig ist. Vorteilhaft ist, dass durch die Verwendung der Auskoppelstufe eine Eindeutigkeit des Frequenzverhaltens erzielbar ist, dass die Verwendung eines nachgeschalteten Filters mit nur einem Eingang möglich ist und ein Differenzeingang dort nicht erforderlich ist, wobei ausserdem der Bauteileaufwand gering bleibt. Die Dimensionierung eines der Auskoppelschaltung nachzuschaltenden Filters ist unabhängig von der Auskoppelschaltung und kann somit für die Filterfunktion optimiert werden. Es erfolgt keine Beeinflussung durch die abgekappte Sinusschwingung vom Gleichrichter als steuernde Spannung des Filters, wobei Mischungen, die durch einen Potentialunterschied zwischen Nullleiter und Masse entstehen, zu kompensieren sind. Die Kompensation erfolgt vorteilhafterweise dadurch, dass die am einen Eingang des Differenzverstärkers anstehende Störspannung über den zweiten Eingang des Differenzverstärkers kompensiert wird und nicht mehr als steuernde Spannung für den Differenzverstärker in Erscheinung tritt. Der Tonfrequenz-Rundsteuer-Empfänger arbeitet nicht mit dem Nulleiter, sondern mit Masse als Versorgungspol.

In einer vorteilhaften Ausführungsform kann der Differenzverstärker ein gegengekoppelter Operationsverstärker sein, dessen nichtinvertierender Eingang der zweite Eingang des Differenzverstärkers ist und dessen invertierender Eingang über einen Vorwiderstand mit dem ersten Eingang des Differenzverstärkers und über einen Gegenkopplungswiderstand mit dem Ausgang des Operationsverstärkers verbunden ist, wobei der Vorwiderstand bei der Bemessung des Teilerverhältnisses des ersten Spannungsteilers mit berücksichtigt ist. Dabei ist vorteilhaft, dass durch den Operationsverstärker eine weitgehende Unabhängigkeit von Halbleitertoleranzen gegeben ist und dass im Zusammenhang mit einer weiteren Gesamtschaltung durch Verwendung von Mehrfach-Operationsverstärkern eine wirtschaftliche und kompakte Ausführungsform zu erzielen ist.

In einer alternativen Ausführungsform kann der Differenzverstärker auch ein basisgesteuerter Transistor sein, wobei die Basis des Transistors mit dem Teilerpunkt des ersten Spannungsteilers und über einen Basis-Vorwiderstand mit dem Versorgungsspannungspotential des Ladekondensators verbunden ist, wobei der Emitter des Transistors an den Teilerpunkt des zweiten Spannungsteilers angeschlossen ist und wobei der Kollektor des Transistors über einen Kollektorwiderstand mit dem Versorgungspotential des Ladekondensators verbunden ist, wobei der Kollektor des Transistors den Ausgang des Differenzverstärkers darstellt und wobei bei der Bemessung der Teilerverhältnisse der Basis-Vorwiderstand und die Widerstände der jeweiligen Transistorstrecken mit berücksichtigt werden.

Bei einer vorteilhaften Ausführungsform der Erfindung ist der erste Spannungsteiler an den vorschaltkondensatorseitigen Eingang des Vollweg-Gleichrichters angeschlossen. Vorteilhaft ist hierbei die Trennung vom Netz durch den Vorschaltkondensator.

Der erste Spannungsteiler kann über einen Schutzwiderstand der Schutzimpedanzbeschaltung an die phasenseitige Netzklemme angeschlossen sein. Auch der zweite Spannungsteiler kann über einen Schutzwiderstand der Schutzimpedanzbeschaltung mit der mittelpunkt- bzw. nullleiterseitigen Netzklemme verbunden sein. Damit wird auch die Auskoppelschaltung durch die Schutzimpedanzbeschaltung geschützt.

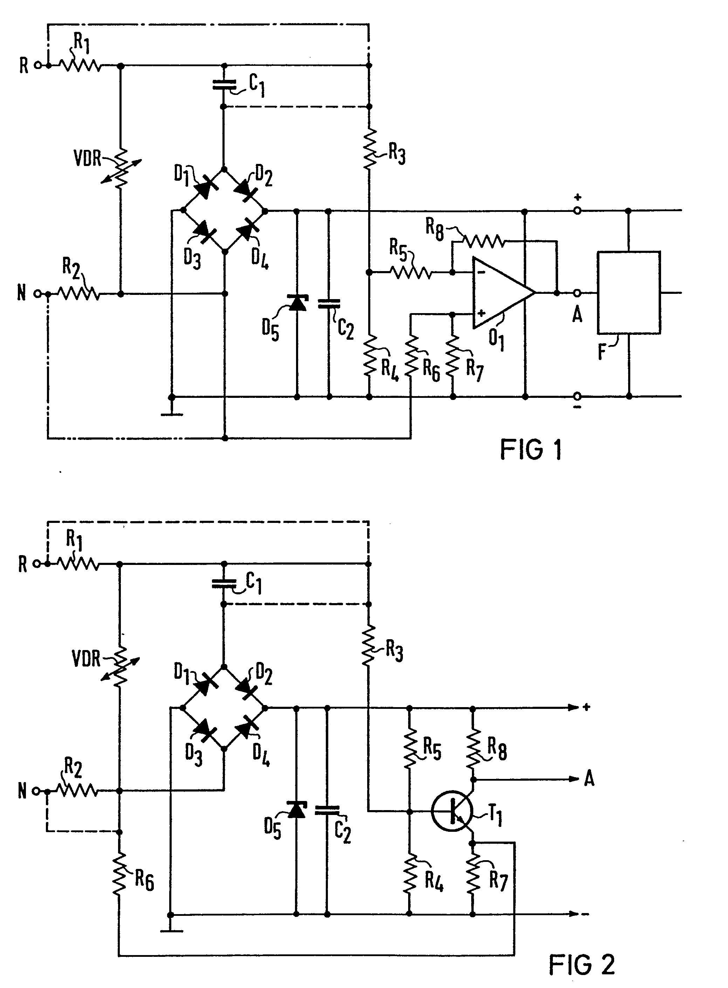

Ausführungsbeispiele der Erfindung werden nachfolgend anhand der Figuren 1 und 2 näher erläutert.

In Fig. 1 ist ein an die Netzklemmen R (Phase) bzw. N (Mittelpunkt- oder Nulleiter) angeschlossenes Kondensatornetzgerät samt der Auskoppelstufe dargestellt. An die Netzklemmen R und N ist jeweils eine Schutzimpedanz $R_1$ bzw. $R_2$ angeschaltet, die die Schutzimpedanzbeschaltung bilden, deren jeweiliges Vorhandensein jedoch nicht zwingend ist. Ebenso nur fakultativ vorgesehen ist eine Überspannungsableiterbeschaltung VDR, die an die Schutzimpedanzen $R_1$ und $R_2$ angeschlossen ist, und zu der eine Serienschaltung aus einem Vorschaltkondensator $C_1$ und einer Gleichrichterbrücke $D_1$, $D_2$, $D_3$, $D_4$ parallel geschaltet ist. Der Vorschaltkondensator $C_1$ ist dabei phasenseitig angeschlossen. An den Brückenausgang der Gleichrichterbrücke $D_1$, $D_2$, $D_3$, $D_4$ ist eine Parallelschaltung aus einer Zenerdiode $D_5$ und einem Ladekondensator $C_2$ angeschlossen, wobei die Zenerdiode $D_5$ durch eine entsprechende Beschaltung der Gleichrichterbrücke $D_1$, $D_2$, $D_3$, $D_4$ mittels Zenerdioden ersetzbar ist. Erfindungsgemäss ist dem Ladekondensator $C_2$ stromversorgungsmässig ein Operationsverstärker $O_1$ parallel geschaltet. Der invertierende Eingang des Operationsverstärkers $O_1$ ist über einen Vorwiderstand $R_5$ an den Teilerpunkt eines Spannungsteilers angeschlossen, wobei für die Steuersignalzuführung der eine Teilerwiderstand $R_3$ im weiteren an die phasenseitige Schutzimpedanz $R_1$ der Schutzimpedanzbeschaltung angeschlossen ist und wobei der zweite Teilerwiderstand $R_4$ an die masseseitige Klemme des Ladekondensators $C_2$ angeschlossen ist. Der nichtinvertierende Eingang des Operationsverstärkers $O_1$ ist an den Teilerpunkt eines weiteren Spannungsteilers angeschlossen, wobei der eine weitere Teilerwiderstand $R_6$ an die mittelpunkts- bzw. nulleiterseitige Schutzimpedanz $R_2$ der Schutzimpedanzbeschaltung angeschlossen ist, und wobei der zweite weitere Teilerwiderstand $R_7$ an die masseseitige Klemme des Ladekondensators $C_2$ angeschlossen ist. Als Gegenkopplung für den Operationsverstärker $O_1$ ist zwischen Ausgang und invertierendem Eingang des Operationsverstärkers $O_1$ ein Gegenkopplungswiderstand $R_8$ geschaltet. Weitere Anschlussmöglichkeiten (strichliert gezeichnet) für die Steuerung bestehen direkt an der Netzklemme R, wobei zu berücksichtigen wäre, dass bei Fehlen der Schutzimpedanz $R_1$ kein Stosswellenschutz des nachgeschalteten Filters vorliegt, sowie direkt am Gleichrichtereingang $D_1$, $D_2$, $D_3$, $D_4$ nach dem Vorschaltkondensator $C_1$. Dabei sind jedoch erhöhte Störungseinflüsse von Modulationsstörungen durch den Netzgleichrichter in Kauf zu nehmen. Der Steuersignalabgriff für die Auskoppelstufe als möglichst direkter Anschluss an den Netzabgriff hat den Vorteil, dass die Tonfrequenz dort am unverfälschtesten auftritt.

Die ein- oder beidphasig vorgesehenen Schutzimpedanzen $R_1$, $R_2$ dienen als Schutz gegen Stosswellen.

Als Signalausgang A der Auskoppelschaltung dient der Ausgang des Operationsverstärkers $O_1$.

An den Netzklemmen R, N, werden die Netzspannung und die dieser überlagerte Tonfrequenzspannung eingespeist. Das nachgeschaltete Kondensatornetzgerät dient der Versorgung des Tonfrequenz-Rundsteuer-Empfängers. Dabei tritt durch die Wirkung der Gleichrichterbrücke $D_1$, $D_2$, $D_3$, $D_4$ am Gleichrichter $D_3$ dieser Brücke eine abgekappte Sinusschwingung auf, die auf Masse bezogen der an den Netzklemmen R, N, angelegten Spannung überlagert ist. Diese Spannung tritt entsprechend dem Teilerverhältnis des einen Spannungsteilers $R_3$, $R_4$ und $R_5$ am invertierenden Eingang des Operationsverstärkers $O_1$ auf. Erfindungsgemäss wird die am Gleichrichter $D_3$ auftretende störende Spannung bezogen auf Masse über den weiteren Spannungsteiler $R_6$, $R_7$ dem nichtinvertierenden Eingang des Operationsverstärkers $O_1$ zugeführt. Somit tritt die störende Spannung am Gleichrichter $D_3$ nicht mehr als steuernde Spannung auf und kann dort auch keine Mischprodukte zur Folge haben. Am Ausgang des Operationsverstärkers ist deshalb das Tonfrequenzsignal in unverzerrter bzw. in eindeutiger Form abnehmbar.

Optimale Signalverhältnisse gemäss der Erfindung sind erzielbar, wenn die Teilerverhältnisse des an den invertierenden Eingang angeschlossenen einen Spannungsteilers unter Einbeziehung des Vorwiderstandes $R_5$ und des an den nichtinvertierenden Eingang angeschlossenen weiteren Spannungsteilers gleich gross sind.

Aufgrund der erfindungsgemässen Lösung ergibt sich, dass die steuernde Spannung des Operationsverstärkers $O_1$ in erster Näherung unabhängig von der Spannung des Null- bzw. Mittelpunktsleiters bezogen auf den zweiten Pol der Versorgung für den Ladekondensator (im allgemeinen Masse) ist und bei geeigneter Auslegung der Auskopplung deshalb auch von der Störung durch Mischung nicht beeinflusst wird.

Die ausgangsseitigen Klemmen plus und minus sind auch für die Stromversorgung der weiteren Elektronik, beispielsweise eines Filters F vorgesehen.

Beim Ausführungsbeispiel nach Figur 2 ist der Operationsverstärker $O_1$ durch einen npn-Transistor $T_1$ ersetzt. Dabei ist dem Ladekondensator $C_2$ die Reihenschaltung eines Kollektorwiderstands $R_8$, eines Transistors $T_1$ und eines Emitterwiderstands $R_7$ parallel geschaltet. Ausserdem ist dem Ladekondensator $C_2$ ein Basisspannungsteiler, bestehend aus einem Widerstand $R_5$ und einem weiteren Widerstand $R_4$ parallel geschaltet. Der Emitter des Transistors $T_1$ ist über einen Widerstand $R_6$ an die nulleiter- bzw. mittelpunktsleiterseitige Schutzimpedanz $R_2$ angeschlossen. Die Basissteuerung des Transistors erfolgt über einen Vorwiderstand $R_3$, der an die phasenseitige Schutzimpedanz $R_1$ angeschlossen ist. Der Vorwiderstand $R_3$ kann auch direkt über die Netzklemme R angeschlossen werden, wobei zu berücksichtigen wäre, dass bei Fehlen der Schutzimpedanz $R_1$ kein Stosswellenschutz des nachgeschalteten Filters vorliegt. Der Vorwiderstand $R_3$ könnte ferner direkt am Gleichrichtereingang $D_1$, $D_2$, $D_3$, $D_4$ nach dem Vorschaltkondensator $C_1$ angeschlossen werden, wobei hier erhöhte Störungseinflüsse von Modulationsstörungen durch den Netzgleichrichter in Kauf zu nehmen sind.

Der Steuersignalabgriff für die Auskoppelstufe als möglichst direkter Anschluss an den Netzabgriff hat den Vorteil, dass die Tonfrequenz dort am unverfälschtesten auftritt.

Die ein- oder beidphasig vorgesehenen Schutzimpedanzen $R_1$, $R_2$ dienen als Schutz gegen Stosswellen.

Der Signalausgang A der Auskoppelschaltung ist an den Kollektor des Transistors $T_1$ angeschlossen.

Auch bei dieser Schaltung tritt durch die Wirkung der Gleichrichterbrücke am Gleichrichter $D_3$ eine abgekappte Sinusschwingung auf, die, auf Masse bezogen, der an die Netzklemmen R und N angelegten Spannung überlagert ist. Diese Spannung tritt entsprechend dem Teilerverhältnis der Widerstände $R_3$, $R_5$ und $R_4$ am Basiseingang auf. Die am Gleichrichter $D_3$ auftretende störende Spannung bezogen auf Masse wird über den Spannungsteiler aus den Widerständen $R_6$, $R_7$ dem Emitter zugeführt. Wie beim Ausführungsbeispiel nach Figur 1 tritt somit die störende Spannung am Gleichrichter $D_3$ nicht mehr als steuernde Spannung an der Basis-Emitter-Diode des Transistors $T_1$ auf und kann dort keine Mischprodukte zur Folge haben. Am Kollektor ist deshalb das Tonfrequenzsignal in unverzerrter bzw. in eindeutiger Form abnehmbar.

Optimale Signalverhältnisse sind erzielbar, wenn die Teilerverhältnisse aus den Spannungsteilern Emitterwiderstand $R_7$ zu Spannungsteilerwiderstand $R_6$ sowie aus Widerständen $R_5$, $R_4$ des Basisspannungsteilers zum Vorwiderstand $R_3$ jeweils unter Berücksichtigung der Transistoreingangswiderstände gleich gross sind.

Eine entsprechende Ausführung der Auskoppelschaltung ist auch mit einem Transistor vom Typ pnp in analoger Weise möglich.

**Patentansprüche**

1. Auskoppelschaltung für einen Tonfrequenz-Rundsteuer-Empfänger mit einem Kondensatornetzgerät in Vollweg-Gleichrichterausführung mit Vorschaltkondensator (C1), wobei netzeingangsseitig eine Schutzimpedanzbeschaltung (R1, R2) sowie eine Überspannungsableiterbeschaltung (VDR) vorsehbar ist, wobei gleichrichterausgangsseitig bzw. im Vollweg-Gleichrichter (D1–D4) selbst eine Zenerdiodenbeschaltung vorsehbar ist, sowie mit einem an den Ausgang des Kondensatornetzgerätes angeschlossenen Ladekondensator ($C_2$), wobei an den Ladekondensator ($C_2$) eine Auskoppelstufe, bestehend aus einem stromversorgungsmässig direkt

mit dem Ladekondensator ($C_2$) verbundenen Differenzverstärker ($O_1$, $T_1$) angeschlossen ist, dessen erster Eingang an den Teilerpunkt eines ersten Spannungsteilers angeschlossen ist, dessen erster Teilerwiderstand ($R_3$) an die phasenseitige Netzklemme (R) angeschlossen ist und dessen zweiter Teilerwiderstand ($R_4$) an das Massepotential des Ladekondensator ($C_2$) angeschlossen ist, wobei der zweite Eingang des Differenzverstärkers ($O_1$, $T_1$) an den Teilerpunkt eines zweiten Spannungsteilers angeschlossen ist, dessen erster Teilerwiderstand ($R_7$) an das Massepotential des Ladekondensators ($C_2$) angeschlossen ist und wobei als Ausgang (A) für das tonfrequente Signal aus der Auskoppelstufe der Ausgang des Differenzverstärkers ($O_1$, $T_1$) dient, dadurch gekennzeichnet, dass der zweite Teilerwiderstand ($R_6$) des zweiten Spannungsteilers an die mittelpunkts- bzw. nulleiterseitige Netzklemme (N) angeschlossen ist, dass die Teilerverhältnisse des ersten und des zweiten Spannungsteilers für eine optimale Kompensation gleich gross sind und dass die Auskoppelstufe im Arbeitsbereich frequenzunabhängig ist.

2. Auskoppelschaltung nach Anspruch 1, dadurch gekennzeichnet, dass der Differenzverstärker ein gegengekoppelter Operationsverstärker ($O_1$) ist, dessen nichtinvertierender Eingang der zweite Eingang des Differenzverstärkers ist und dessen invertierender Eingang über einen Vorwiderstand ($R_5$) mit dem ersten Eingang des Differenzverstärkers und über einen Gegenkopplungswiderstand ($R_8$) mit dem Ausgang des Operationsverstärkers ($O_1$) verbunden ist, wobei der Vorwiderstand ($R_5$) bei der Bemessung des Teilerverhältnisses des ersten Spannungsteilers mitberücksichtigt ist.

3. Auskoppelschaltung nach Anspruch 1, dadurch gekennzeichnet, dass der Differenzverstärker ein basisgesteuerter Transistor ($T_1$) ist, dass die Basis des Transistors ($T_1$) mit dem Teilerpunkt des ersten Spannungsteilers ($R_3$, $R_4$) und über einen Basis-Vorwiderstand ($R_5$) mit dem Versorgungsspannungspotential des Ladekondensators ($C_2$) verbunden ist, dass der Emitter des Transistors ($T_1$) an den Teilerpunkt des zweiten Spannungsteilers ($R_6$, $R_7$) angeschlossen ist, dass der Kollektor des Transistors ($T_1$) über einen Kollektorwiderstand ($R_8$) mit dem Versorgungspotential des Ladekondensators ($C_2$) verbunden ist, dass der Kollektor des Transistors den Ausgang des Differenzverstärkers darstellt und dass bei der Bemessung der Teilerverhältnisse der Basis-Vorwiderstand ($R_5$) und die Widerstände der jeweiligen Transistorstrecken mitberücksichtigt werden.

4. Auskoppelschaltung nach einem der Ansprüche 1 bis 3, dadurch gekennzeichnet, dass der erste Spannungsteiler ($R_3$, $R_4$) an den vorschaltkondensatorseitigen Eingang des Vollweg-Gleichrichters ($D_1$, $D_2$, $D_3$, $D_4$) angeschlossen ist.

5. Auskoppelschaltung nach einem der Ansprüche 1 bis 3, dadurch gekennzeichnet, dass der erste Spannungsteiler ($R_3$, $R_4$) über einen Schutzwiderstand ($R_1$) der Schutzimpedanzbeschaltung an die phasenseitige Netzklemme (R) angeschlossen ist.

6. Auskoppelschaltung nach einem der Ansprüche 1 bis 5, dadurch gekennzeichnet, dass der zweite Spannungsteiler ($R_6$, $R_7$) über einen Schutzwiderstand ($R_2$) der Schutzimpedanzbeschaltung mit der mittelpunkts- bzw. nulleiterseitigen Netzklemme (N) verbunden ist.

## Claims

1. An output coupling circuit for an audio-frequency ripple control receiver with a capacitive mains supply circuit in a full-wave rectifier design comprising a series capacitor (C1), where, on the mains input side, a protective impedance (R1, R2) and a surge arrester (VDR) can be provided, where a Zener diode can be provided on the rectifier output side or in the full-wave rectifier (D1–D4) itself, and with a storage capacitor ($C_2$) connected to the output of the capacitive mains supply circuit, where the storage capacitor ($C_2$) is connected to an output coupling stage consisting of a differential amplifier ($O_1$, $T_1$) directly connected to the storage capacitor ($C_2$) for supply current, and having a first input connected to the tapping of a first potential divider whose first divider resistor ($R_3$) is connected to the live mains terminal (R) and whose second divider resistor ($R_4$) is connected to an earth potential point together with the storage capacitor ($C_2$) where the second input of the differential amplifier ($O_1$, $T_1$) is connected to the tapping of a second potential divider whose first divider resistor ($R_7$) is connected to the earth potential point and storage capacitor ($C_2$) and where the output of the differential amplifier ($O_1$, $T_1$) serves as output (A) for the audio-frequency signal from the output coupling stage, characterised in that the second divider resistor ($R_6$) of the second potential divider is connected to the neutral mains terminal (N), that the divider ratios of the first and second potential dividers are equal for an optimum compensation and that the output coupling stage is independent of frequency in the operating range.

2. An output coupling circuit as claimed in Claim 1, characterised in that the differential amplifier is an operational amplifier ($O_1$) with negative feedback, whose non-inverting input is the second input of the differential amplifier and whose inverting input is connected via a series resistor ($R_5$) to the first input of the differential amplifier and is connected via a negative feedback resistor ($R_8$) to the output of the operational amplifier ($O_1$), where the series resistor ($R_5$) is taken into account in dimensioning the divider ratio of the first potential divider.

3. An output coupling circuit as claimed in Claim 1, characterised in that the differential amplifier is a base-controlled transistor ($T_1$), that the base of the transistor ($T_1$) is connected to the divider point of the first potential divider ($R_3$, $R_4$) and is connected via a series base resistor ($R_5$) to the supply voltage potential of the storage capacitor ($C_2$), that the emitter of the transistor ($T_1$) is con-

nected to the divider point of the second potential divider ($R_6$, $R_7$), that the collector of the transistor ($T_1$) is connected via a collector resistor ($R_8$) to the supply potential side of the storage capacitor ($C_2$), that the collector of the transistor represents the ouput of the differential amplifier, and that the series base resistor ($R_5$) and the resistors of the transistor paths in question are taken into account in dimensioning the divider ratios.

4. An output coupling circuit as claimed in one of the Claims 1 to 3, characterised in that the first potential divider ($R_3$, $R_4$) is connected to the series-capacitor side of the full-wave rectifier ($D_1$, $D_2$, $D_3$, $D_4$) input.

5. An output coupling circuit as claimed in one of the Claims 1 to 3, characterised in that the first potential divider ($R_3$, $R_4$) is connected to the live mains terminal (R) via a protective resistor ($R_1$) of the protective impedance.

6. An output coupling circuit as claimed in one of the Claims 1 to 5, characterised in that the second potential divider ($R_6$, $R_7$) is connected via a protective resistor ($R_2$) of the protective impedance to the neutral mains terminal (N).

## Revendications

1. Circuit de découplage pour un récepteur de télécommande centralisée à fréquence vocale, possédant un bloc d'alimentation à condensateur du type à redresseur pleine-onde avec condensateur ($C_1$) intercalé en amont, un dispositif de protection à impédance ($R_1$, $R_2$) ainsi qu'un dispositif de parasurtension (VDR) pouvant être prévu du côté de l'entrée du secteur, un dispositif à diode Zener pouvant être prévu du côté de la sortie du redresseur ou à l'intérieur même du redresseur pleine-onde ($D_1$–$D_4$), et possédant en plus un condensateur de lissage ($C_2$) branché sur la sortie du bloc d'alimentation à condensateur et auquel est raccordé un étage de découplage comprenant un amplificateur différentiel ($O_1$, $T_1$) connecté directement au condensateur de lissage ($C_2$) pour l'alimentation, dont la première entrée est connectée au point de division d'un premier diviseur de tension dont une première résistance ($R_3$) est connectée à la borne de phase (R) du secteur et dont la seconde résistance ($R_4$) est connectée au potentiel de masse du condensateur de lissage ($C_2$), la deuxième entrée de l'amplificateur différentiel ($O_1$, $T_1$) étant connectée au point de division d'un second diviseur de tension dont une première résistance ($R_7$) est connectée au potentiel de masse du condensateur de lissage ($C_2$), la sortie de l'amplificateur différentiel ($O_1$, $T_1$) servant de sortie (A) pour le signal à fréquence vocale de l'étage de découplage, caractérisé en ce que la deuxième résistance ($R_6$) du second diviseur de tension est connectée à la borne (N) du conducteur neutre ou médian du secteur, que les rapports de division du premier et du second diviseur de tension sont les mêmes, en vue d'une compensation optimale, et que l'étage de découplage est indépendant de la fréquence dans la plage de travail.

2. Circuit de découplage selon la revendication 1, caractérisé en ce que l'amplificateur différentiel est un amplificatuer opérationnel à réaction ($O_1$) dont l'entrée directe est la deuxième entrée de l'amplificateur différentiel et dont l'entrée inverseuse est reliée à travers une résistance série ($R_5$) à la première entrée de l'amplificateur différentiel et à travers une résistance de réaction ($R_8$) à la sortie de l'amplificateur opérationnel ($O_1$), la détermination du rapport de division du premier diviseur de tension ayant été faite en tenant compte de la résistance série ($R_5$).

3. Circuit de découplage selon la revendication 1, caractérisé en ce que l'amplificateur différentiel est un transistor ($T_1$) commandé par la base, que la base du transistor ($T_1$) est reliée au point de division du premier diviseur de tension ($R_3$, $R_4$) et à travers une résistance série de base ($R_5$) au potentiel d'alimentation du condensateur de lissage ($C_2$), que l'émetteur du transistor ($T_1$) est relié au point de division du second diviseur de tension ($R_6$, $R_7$), que le collecteur du transistor ($T_1$) est relié à travers une résistance de collecteur ($R_8$) au potentiel d'alimentation du condensateur de lissage ($C_2$), que le collecteur du transistor représente la sortie de l'amplificateur différentiel et que, lors de la détermination des rapports de division, il a été tenu compte de la résistance série de base ($R_5$) et des résistances des circuits concernés des transistors.

4. Circuit de découplage selon une des revendications 1 à 3, caractérisé en ce que le premier diviseur de tension ($R_3$, $R_4$) est relié à l'entrée côté condensateur intercalé du redresseur pleine-onde ($D_1$, $D_2$, $D_3$, $D_4$).

5. Circuit de découplage selon une des revendications 1 à 3, caractérisé en ce que le premier diviseur de tension ($R_3$, $R_4$) est relié à travers une résistance protectrice ($R_1$) du dispositif de protection à impédance à la borne de phase (R) du secteur.

6. Circuit de découplage selon une des revendications 1 à 5, caractérisé en ce que le second diviseur de tension ($R_6$, $R_7$) est relié à travers une résistance protectrice ($R_2$) du dispositif de protection à impédance à la borne (N) du conducteur médian ou neutre du secteur.

FIG 1

FIG 2